Europäisches Patentamt

European Patent Office

Office européen des brevets

(11) Publication number: **0 489 390 A2**

## EUROPEAN PATENT APPLICATION

(21) Application number: **91120698.5**

(22) Date of filing: **02.12.91**

(51) Int. Cl.⁵: **C08L 83/04**

(30) Priority: **03.12.90 US 620968**

(43) Date of publication of application:
**10.06.92 Bulletin 92/24**

(84) Designated Contracting States:
**DE FR GB**

(71) Applicant: **DOW CORNING CORPORATION**
**P.O. Box 1767**
**Midland Michigan 48686-0994(US)**

(72) Inventor: **Lee, Michael Kang-Jen**
**2712 Gabriel Lane**
**Midland, Michigan(US)**
Inventor: **Saam, John Carlton**
**2320 Cranbrook**
**Midland, Michigan(US)**

(74) Representative: **Spott, Gottfried, Dr. et al**
**Spott Weinmiller & Partner**
**Sendlinger-Tor-Platz 11**
**W-8000 München 2(DE)**

(54) Curable random dimethylsiloxane/diphenylsiloxane copolymer compositions.

(57) The combination of 1) a random organosiloxane copolymer wherein from 20 to 50 mol percent of the repeating units are diphenylsiloxane, from 0 to 20 mol percent contain a silicon-bonded lower alkenyl radical and the remaining units are dimethylsiloxane, and 2) as little as 10 weight percent, based on the copolymer, of a finely divided reinforcing filler can be cured using organic peroxides or other means to yield elastomeric materials that not only exhibit unexpectedly high tensile strength and other desirable physical properties under ambient conditions, but retain their elastomeric properties during long term exposure to temperatures above 300°C. The reinforcing filler is preferably a fume form of silica, alumina or titania.

EP 0 489 390 A2

This invention relates to novel organosiloxane compositions. More particularly, this invention relates to a class of random dimethylsiloxane/diphenylsiloxane copolymers that can be cured by conventional means to yield elastomers exhibiting a unique combination of desirable physical properties that are retained during long term exposure to temperatures above 300°C.

A number of references disclose dimethylsiloxane/diphenylsiloxane copolymers containing up to 67 mole percent of diphenylsiloxane units.

However, while the prior art reports the preparation and some properties of random dimethylsiloxane/diphenylsiloxane copolymers containing up to 67 mole percent of diphenylsiloxane units, teachings of curing silica-filled copolymer compositions to form reinforced elastomers or other useful products are limited to copolymers containing up to 30 mole percent of diphenylsiloxane units. The present inventors have discovered that all of the cured elastomer products exemplified in the prior art exhibit a substantial loss in weight and desirable physical properties during extended heating at temperatures above 250°C.

A shortcoming of cured elastomers prepared from many known polydiorganosiloxanes in combination with a reinforcing filler such as silica is an upper limit on tensile strength of about 1000 p.s.i. and the relatively rapid loss in tensile strength, weight and an increase in durometer hardness that occur during even relatively brief exposures to temperatures above about 250°C. This shortcoming has barred the use of organosiloxane elastomers in applications where they are exposed to temperatures above 250°C. for extended periods of time.

It has now been found that the combination of A) a random organosiloxane copolymer wherein from 20 to 50 mol percent of the repeating units are diphenylsiloxane, from 0 to 20 mol percent contain a silicon-bonded lower alkenyl radical and the remaining units are dimethylsiloxane, and B) as little as 10 parts by weight percent per 100 parts copolymer of a finely divided reinforcing filler such as silica, alumina or titania can be cured using organic peroxides or other conventional means to yield elastomers that not only exhibit unexpectedly high tensile strength and other desirable physical properties under ambient conditions, but retain their elastomeric properties during long term exposure to temperatures above 300°C.

This invention provides a novel class of curable organosiloxane compositions that cure to yield thermally stable elastomers, said compositions comprising

(A) an elastomeric random diorganosiloxane copolymer consisting essentially of dimethylsiloxane units, from 20 to 50 mol percent of diphenylsiloxane units, from 0 to 20 mol of units with a silicon-bonded alkenyl radical containing from 2 to 6 carbon atoms and terminal units selected from the group consisting of triorganosiloxy and silanol,

(B) a finely divided reinforcing filler in an amount sufficient to enhance the physical properties of elastomers prepared from said composition, and

(C) a curing agent for said copolymer selected from the group consisting of organic peroxides and combinations of an organosilicon compound containing an average of more than two hydrolyzable groups per molecule and an effective amount of a curing catalyst, with the proviso that said copolymer contains terminal silanol groups when one of said combinations is present as the curing agent.

This invention also provides a method for preparing high strength, processable organosiloxane compositions that cure to yield elastomers exhibiting tensile strengths of at least 1000 p.s.i. and excellent resistance to degradation at temperatures above 250°C. The method comprises (a) blending to homogeneity an elastomeric random copolymer of this invention with an effective amount of a reinforcing filler and (b) curing this composition using an organic peroxide or by the reaction of a silanol-terminated copolymer of this invention and an organosilicon compound containing hydrolyzable groups bonded to silicon.

The novel features that characterize the present copolymers are a concentration of diphenylsiloxane units of from 20 to 50 mol percent, a degree of polymerization sufficient to form a viscoelastic copolymer, which is typically at least 700 and a completely random arrangement of dimethylsiloxane and diphenylsiloxane units within the copolymer molecules. Preferred copolymers contain up to 20 mol percent of alkenyl-substituted diorganosiloxane units where the alkenyl radical contains from two to six carbon atoms. Preferred units of this type are methylvinylsiloxane and methyl-5-hexenylsiloxane.

A concentration of diphenylsiloxane units of at least 30 mol percent is preferred for maximum resistance of the present copolymers to heat induced degradation at temperatures above 300°C.

The combination of the present copolymers with from about 10 up to about 50 parts by weight or more per 100 parts of copolymer of a preferred class of reinforcing fillers discussed in a subsequent section of this specification is considered responsible for the unexpectedly high levels of physical properties exhibited by cured elastomers prepared from the present copolymers and the ability of the cured materials to retain a useful portion of these properties such as durometer hardness and resiliency during prolonged heating at temperatures of 320°C.

2

The present inventors discovered a substantial increase in the physical properties and resistance to heat-induced degradation of elastomers prepared from random dimethylsiloxane/diphenylsiloxane copolymers and a reinforcing filler as the concentration of diphenylsiloxane units in the copolymer is increased from 20 up to about 50 mole percent. Both of these desirable properties decrease when the concentration of diphenylsiloxane units exceeds about 50 percent. The reason for this is not completely understood.

The present inventors also discovered that the yield of cyclic diorganosiloxanes produced as a by-product during the polymerization reaction exceeds about 30 percent and the degree of polymerization decreases to below about 1000 as the concentration of diphenylsiloxane units in the initial monomer mixture approaches 50 mol percent.

The copolymers of this invention are prepared by polymerizing to the point of equilibrium a mixture of the corresponding cyclic diorganosiloxane tetramers in the presence of a catalyst that will promote rearrangement of siloxane (SiO) bonds. It is known that the polymerization of cyclic diorganosiloxane tetramers is a reversible reaction.

In accordance with a typical polymerization, a mixture containing octamethylcyclotetrasiloxane, from 20 to 50 mol percent octaphenylcyclotetracyclosiloxane and, optionally, from 0 to 20 mol percent of a cyclotetrasiloxane containing silicon-bonded vinyl or other alkenyl radicals is heated in the presence of a basic catalyst such as potassium silanolate that is capable of rearranging siloxane (SiO) bonds. The initial reaction mixture may also contain small amounts of the corresponding cyclic tri- and/or pentasiloxanes together with the cyclic tetrasiloxanes.

When the terminal groups of the copolymer are triorganosiloxy, the reaction mixture also includes from 0.04 to 1.0 weight percent, based on total monomers, of a reactant capable of introducing this terminal group into the copolymer. Suitable reactants include triorganohalosilanes, hexaorganodisiloxanes, hexaorganodisilazanes and low molecular weight diorganovinyl-terminated polydimethylsiloxanes containing an average of from 5 to about 10 repeating units per molecule. The organic groups bonded to silicon are typically monovalent hydrocarbon or halogenated hydrocarbon radicals. Preferred hydrocarbon radicals include alkyl containing from 1 to 4 carbon atoms, vinyl and phenyl.

It will be understood that the reactants described in the immediately preceding paragraph for introducing triorganosiloxy terminal groups are not present when the desired terminal group is silanol.

The temperature of the polymerization reaction mixture is typically from 100 to about 200°C.

To achieve the maximum degree of randomness required for the present copolymers the polymerization reaction must be continued for a period of time sufficient to ensure establishment of equilibrium conditions. At this point in the reaction the concentration of cyclosiloxane becomes constant and the dimethylsiloxane and diphenylsiloxane units are randomly distributed throughout the copolymer molecules. This time period is typically about 16 hours using a polymerization temperature of 165°C.

The course of the polymerization reaction and the distribution of repeating units within the polymer molecules can be determined using conventional analytical techniques for polymers, including gel permeation chromatography and $^{29}$Si nuclear magnetic resonance.

The degree of polymerization (DP) exhibited by the present copolymers is dependent upon a number of variables, including type and concentration of catalyst, reaction conditions and the relative concentrations of the initial monomers. DP values in the range of from 700 to 1500 are preferred for development of an optimum combination of physical properties in the final cured elastomer.

Following completion of the polymerization step the elastomeric polymer is isolated and purified using conventional methods. Typically, the crude polymer is dissolved in a suitable solvent such as toluene and precipitated using a non-solvent that will not precipitate low cyclic diorganosiloxanes, polymerization catalyst and other impurities present in the final reaction mixture. Preferred liquids for precipitating the present copolymers include, but are not limited to, alcohols containing from 1 to about 4 carbon atoms. The purified copolymers are viscoelastic materials characterized by a glass transition temperature of -30°C. or less.

While one precipitation is in many instances sufficient to remove of impurities, particularly cyclic diorganosiloxanes, from the present copolymers, it may be desirable to repeat the precipitation process one or two additional times to ensure removal of all cyclic diorganosiloxanes. These can adversely affect the properties of the copolymers.

The present copolymers are viscoelastic gums at 25°C. and exhibit a unique combination of unusually high thermal stability, as determined by weight loss values of less than 15 percent during a 24 hour exposure to a temperature of 320°C. and a glass transition temperature of -30°C. or less, the latter being required for useful elastomeric properties.

The cured copolymers are relatively unaffected by liquid hydrocarbons. For example, the copolymers exhibit weight gains of from 40 to 150 percent during immersion in hexane for from two to three days, compared with a weight gain of over 300 percent for a polydimethylsiloxane over the same period.

The copolymers of this invention can be cured using many of the reactions typically used to cure polyorganosiloxanes. These include but are not limited to (1) heating the copolymer in the presence of vinyl-specific or non-vinyl-specific organic peroxides and (2) reacting a copolymer containing terminal silanol groups with a silane or other organosilicon compound containing an average of more than two silicon-bonded hydrolyzable groups such as alkoxy, acyloxy or dialkylketoximo in the presence of moisture and a suitable catalyst such as compounds of tin and titanium.

A preferred method for curing the present copolymers comprises heating a copolymer containing a vinyl or other alkenyl radical on from 0.1 to about 1 percent of the silicon atoms in the presence of an organic peroxide. Most preferably, the peroxide is vinyl-specific such as 2,5-dimethyl-2,5-bis(t-butylperoxy)-hexane.

The curable compositions of this invention are prepared by blending to homogeneity at least one of the present copolymers with about 10 percent or more, based on the weight of the copolymer, of least one finely divided reinforcing filler and a vinyl-specific organic peroxide or one of the other curing agents described in the preceding section of this specification. It will be understood by those skilled in the art that suitable reinforcing filler should not interact with the present copolymers in a way that adversely affects the processability of the curable composition or the properties of the cured elastomers prepared from these compositions.

Preferred fillers exhibit a surface area of at least about 50 square meters per gram and include fume and precipitated forms of silica, alumina and titania. This filler preference is based on the desirable combination of physical properties imparted by these fillers to the cured elastomer.

Elastomers prepared by curing compositions comprising one of the present vinyl-containing copolymers and a reinforcing filler exhibit uniquely high values of physical properties, with tensile strengths typically greater than 1000 psi. The filler concentration is preferably from 30 to about 50 parts by weight.

It is well known to treat or surface modify some reinforcing fillers, particularly silica, with low molecular weight organosilicon compounds containing hydroxyl groups or other groups capable of reacting with the hydroxyl groups on the filler. The purpose of this treatment can be to prevent an effect referred to in the art as "creping" characterized by an increase in viscosity of the curable organosiloxane composition to the extent that it can no longer be processed using the mills, mixers and other equipment conventionally used to process curable organosiloxane compositions.

Additional reasons for treating the filler are to improve "wettability" of the filler surface by the present copolymers and/or to introduce groups such as vinyl or other ethylenically unsaturated groups on to the surface of the filler. These groups react with groups present on the copolymer during curing, thereby chemically incorporating particles of filler into the cured copolymer network. This has been shown to improve the physical properties of the cured elastomer.

The present inventors discovered that the silanol-terminated polydiorganosiloxanes typically used as processing aids adversely affect the durometer and heat stability of the cured elastomers and should be avoided. This effect is not observed using an alkoxysilane such as methyltrimethoxysilane alone or in combination with at least one hexaorganodisilazane as the filler treating agent.

Methods for pre-treating silica or treating it in the presence of other ingredients during preparation of curable organosiloxane compositions are well known and do not constitute part of this invention.

In addition to the copolymer, filler, curing agent and optional curing catalyst, the present curable composition can contain one or more of the additives conventionally used in organosiloxane elastomers to impart new properties to the elastomers or modify existing ones. These additives include but are not limited to pigments, dyes, flame retardants, heat stabilizers, lubricating agents, non-reinforcing fillers such as quartz and diatomaceous earth and electrically or thermally conductive materials. It has been found that the presence of from 1 to about 5 parts by weight of ferric oxide per 100 parts by weight of the present copolymer is particularly effective in increasing the resistance to heat induced degradation of elastomers prepared using these copolymers at temperatures of up to 370°C.

Curable compositions containing the organosiloxane copolymers of this invention can be prepared using the same types of mixing equipment conventionally used to process high consistency organosiloxane compositions. Suitable equipment includes two- and three-roll rubber mills in addition to sigma-blade and dough type mixers.

The following examples are intended to describe preferred embodiments of the present invention and should not be interpreted as limiting the scope of the invention as defined in the accompanying claims. Unless otherwise specified all parts and percentages specified in the examples are by weight and physical properties were measured at 25°C.

EP 0 489 390 A2

This example describes preparation and properties of a preferred group of copolymers of this invention.

A Helicone(R) mixer was charged with 170.3 parts (49.8 mole percent) of a mixture containing 92 weight percent octamethylcyclotetrasiloxane and 6 weight percent of the corresponding cyclic pentamer, 450 parts, corresponding to 50 mol percent of octaphenylcyclotetrasiloxane, 0.83 part, corresponding to 0.2 mol percent, of a mixture containing 74 weight percent of 1,3,5,7-tetramethyl-1,3,5,7-tetravinyl cyclotetrasiloxane and 26 weight percent of the corresponding cyclic pentamer, 0.31 part of a dimethylvinylsiloxy-terminated polydimethylsiloxane containing an average of 7 dimethylsiloxane units per molecule (referred to hereinafter as $Me_2Vi$ endblocker) and 1.1 part of potassium silanolate as the polymerization catalyst.

The contents of the mixer were blended for 22 hours while the mixing chamber was heated at a temperature of 165°C. while dry nitrogen was slowly circulated through the chamber. At the end of this period the contents of the mixer were cooled to ambient temperature and the catalyst was neutralized using a number of equivalents of phosphoric acid equal to the number of equivalents of potassium silanolate used as the polymerization catalyst.

The crude copolymers, all of which were viscoelastic gums, were purified by dissolving them in toluene at room temperature to form solutions containing from 8 to 10 weight percent of the copolymers. An amount of methanol equal in volume to the toluene was then added. The copolymer that precipitated was recovered by decanting the liquid followed by washing the copolymer with methanol. To ensure removal of cyclic diorganosiloxanes and other impurities the solubilization and precipitation was repeated two additional times. The final yield of recovered copolymer was dried at 110°C. under a pressure of 1-10 mm. Hg for about 16 hours.

Analysis of the maxima present in the $^{29}$Si NMR spectra of both the copolymer and the cyclic diorganosiloxanes produced as a by-product of the polymerization reaction indicated a random distribution of repeating units in both of these materials.

The molecular weight of the copolymer was measured using gel permeation chromatography with tetrahydrofuran as the solvent and a flow rate of 1 cc/minute.

The amount of by-product cyclic tetrasiloxanes was determined using $^{29}$Si nuclear magnetic resonance (NMR) with a 15 weight percent solution of the copolymer in $CDCl_3$ and tetramethylsilane as the internal standard. 0.5 weight percent of chromium acetylacetonate was added as a relaxation agent.

The amounts of monomers and potassium silanolate catalyst used to prepare each of the copolymers evaluated, including those prepared for comparative purposes, are summarized in the following Table 1 together with the yield of cyclic diorganosiloxane and the molecular weight (number and weight average) and degree of polymerization of the copolymer. All of the copolymers contained 0.2 mole percent of non-terminal vinyl containing siloxane units.

5

Table 1

| | Sample No. | | | | | | | |
|---|---|---|---|---|---|---|---|---|
| | 1C | 2 | 3 | 4 | 5 | 6 | 7C | 8C |
| [(CH3)2SiO]4, Wt.% | 99.51 | 87.4 | 77.01 | 60.03 | 46.76 | 27.35 | 13.89 | 8.57 |
| (Ph2SiO)4, Wt.% | 0.00 | 12.14 | 22.56 | 39.60 | 52.91 | 72.29 | 85.88 | 91.11 |
| Mole% of (Ph2SiO)4 | 0 | 5 | 10 | 20 | 30 | 50 | 70 | 80 |
| (CH2ViSiO)4, Wt.% | 0.24 | 0.22 | 0.21 | 0.18 | 0.16 | 0.13 | 0.11 | 0.11 |
| Me2Vi End-Blocker, Wt.% | 0.09 | 0.09 | 0.08 | 0.07 | 0.06 | 0.05 | 0.04 | 0.08 |
| Catalyst, Wt.% | 0.16 | 0.15 | 0.14 | 0.12 | 0.11 | 0.18 | 0.08 | 0.14 |
| Yield of Cyclosiloxane, Mol% | 15.7 | 11.9 | 14.8 | 17.4 | 22.1 | 29.7 | 54.6 | 77.5 |
| $M_n \times 10^{-5}$ | 1.83 | 1.59 | 1.39 | 1.48 | 1.42 | 0.96 | 1.27 | 0.55 |
| $M_w \times 10^{-5}$ | 3.28 | 3.87 | 3.43 | 4.20 | 3.08 | 2.51 | 2.70 | 1.11 |
| Degree of Polymerization $\times 10^{-3}$ | 2.47 | 1.98 | 1.61 | 1.50 | 1.28 | 0.71 | 0.79 | 0.32 |
| Mole% Ph2SiO Found | ND | ND | 8.8 | ND | 26.8 | 45.7 | 65.8 | ND |

Ph = Phenyl
Vi = Vinyl
Me2Vi End Blocker = $ViMe_2SiO(SiMe_2O)_7Me_2Vi$
Me = Methyl
ND = Not Determined

Samples 1C, 7C and 8C were prepared for comparative purposes and are not within the scope of the present invention.

Weight loss during heat aging was determined using a thermogravimetric analyzer and a heating rate of 10°C. per minute in both helium and air. The results are reported in Table 2.

The weight loss was also measured isothermally by placing the a sample of the copolymer to be evaluated in a circulating air oven maintained at a temperature of 320°C. The results are reported in Table 3.

Samples of each copolymer and a dimethylsiloxane homopolymer were cured by milling them together with 0.7 weight percent of 2,5-dimethyl-2,5-bis(t-butylperoxy)hexane for about 5 minutes. The resultant compositions were cured in sheet form by heating for 10 minutes at 175°C. using a chase and a hydraulic press. The samples were post cured for 4 hours in an oven maintained at a temperature of 200°C.

A sample of polymer weighing between 0.1 and 0.4 g. was placed in 700 cc. of hexane for two to three days under ambient conditions. The percentage of swelling was determined using the equation $(W_f/W_i) \times 100$, where $W_i$ and $W_f$ represent, respectively, the weights of the sample prior to and following immersion in hexane. The results of this evaluation are recorded in Table 4.

The glass transition temperatures of copolymers described in Table 1 containing from 0 to 80 mole percent of diphenylsiloxane units were determined under a helium atmosphere using a heating rate of 10°C./minute. The results of this series of evaluations are recorded in Table 5.

The tensile strength and elongation at break of the cured copolymers were measured as described in ASTM test method No. D412. The results are reported in Table No. 6. The copolymers were cured by blending 100 parts by weight of the copolymer with 0.8 parts of 2,5-dimethyl-2,5-bis(t-butylperoxy)hexane. The resultant mixture was then cured in the form of a sheet by heating it for ten minutes in a hydraulic press maintained at a temperature of 175°C. The sheet was post-cured for 4 hours at a temperature of 200°C. Test samples were cut from the sheet and evaluated in accordance with the appropriate ASTM test method. The results are reported in Table 6.

Table 2

| Weight Loss of Copolymers In Helium and Air | | | | |
|---|---|---|---|---|
| Mol % $Ph_2SiO$ Units* | Temperature of Initial Loss | | Temperature of 10% Loss | |
| | He | Air | He | Air |
| 0(c) | 340 | 325 | 389 | 393 |
| 5(c) | 300 | 340 | 352 | 397 |
| 10(c) | 335 | 365 | 391 | 415 |
| 30 | 360 | 367 | 419 | 432 |
| 50 | 410 | 398 | 470 | 458 |

(c) = Included for comparative purposes
* = Based on Initial Monomers

Table 3

| Weight Loss of Copolymers At 320°C. | | | | | |
|---|---|---|---|---|---|
| Hours @ 320°C. | Mol Percent $Ph_2SiO$ Units | | | | |
| | 0(c) | 10(c) | 30 | 50 | 80(c) |
| 1 | 1.7 | 1.9 | 0.2 | 0.5 | 1.7 |
| 3 | 2.6 | 5.6 | 1.0 | 1.2 | 3.9 |
| 5 | 3.3 | 8.8 | 2.0 | 2.3 | 5.8 |
| 24 | 22.5 | 24.4 | 10.0 | 13.0 | 19.0 |

Surprisingly, the copolymer containing 10 mol percent of diphenylsiloxane units exhibited a greater weight loss than the dimethylsiloxane homopolymer and the copolymer containing 30 mol percent of diphenylsiloxane units had a smaller weight loss than all of the other polymers.

7

Table 4

| Weight Gain of the Crosslinked Copolymers in Hexane | |
| --- | --- |
| Mol % Ph$_2$SiO | % Swelling* |
| 0(c) | 324, 325 |
| 10(c) | 270, 277 |
| 30 | 156, 154 |
| 50 | 41, 43 |
| 70(c) | 15, 16 |

\* = Two samples of each polymer were evaluated.

Table 5

| Mole % Ph$_2$SiO | Glass Transition Temperature (°C.) |
| --- | --- |
| 0* | -125 |
| 5* | -114 |
| 10* | -106 |
| 20* | -86 |
| 30 | -68 |
| 50 | -30 |
| 70* | -5 |
| 80* | 4 |

\* = Not within the scope of the present invention.

The upper limit of the glass transition temperature for elastomeric properties is -30°C.

Table 6

| Tensile Strength and Elongation of Cured Polyorganosiloxanes | | |
| --- | --- | --- |
| Polymer Composition Mol % Ph$_2$SiO | Tensile Strength psi/KPa | Elongation % |
| 0(c) | 36 | 60 |
| 10(c) | 45 | 158 |
| 30 | 36 | 117 |
| 50 | 52 | 355 |
| 80(c) | 372 | 474 |

Example 2

This example demonstrates the unique properties exhibited by an elastomer prepared from compositions comprising a preferred copolymer of this invention containing 30 mol percent of diphenylsiloxane units, a reinforcing filler and a vinyl specific peroxide.

The elastomer was prepared by blending the following ingredients to homogeneity using a sigma blade dough type mixer:

(A) 50 parts of a dimethylsiloxane/diphenylsiloxane copolymer containing 30 mol percent of diphenylsiloxane units and 0.2 mol percent of methylvinylsiloxane units, identical to sample 5 in Table 1, and

(B) 30 parts of fume silica pre-treated with either methyltrimethoxysilane (silica B1) or phenyltrimethoxysilane (silica B2) and an optional processing aid specified in the following Table 7. Processing aid 1 was a hydroxyl terminated liquid having a viscosity of about 0.04 Pa•s at 25°C. and containing about 4 weight percent of silicon-bonded hydroxyl radicals. Processing aid 2 was a hydroxyl-terminated poly-

8

methylphenylsiloxane having a viscosity of about 0.5 Pa•s at 25°C. and a hydroxyl content of about 4.5 weight percent.

Mixing was continued for 2 hours following completion of the filler addition while the composition was maintained at a temperature of 70°C. The compositions were then combined with 0.7 weight percent of 2,5-dimethyl-2,5-bis(t-butylperoxy)hexane based on the weight of the composition, blended to homogeneity and then molded into test samples in accordance with the provisions of ASTM test method D412 for measurement of tensile properties or in accordance with the provisions of ASTM test method D 2240 for measurement of durometer hardness (A Scale). The samples for durometer hardness determinations were 0.1 inch (0.25 cm.) in thickness and were stacked in layers of 4 for testing. The properties are recorded in Table 7. The polyorganosiloxane present in the comparative sample was a gum type dimethylvinylsiloxy-terminated polydimethylsiloxane (referred to hereinafter as "the polydimethylsiloxane") containing a total of 0.15 mol percent of methylvinylsiloxy units and exhibiting a Williams plasticity number of about 152 in place of the copolymer of this invention.

Table 7

Sample No.

| Ingredients | 1 | 2 | 3 | 4 |
|---|---|---|---|---|
| (Parts/100 of Copolymer*) | | | | |
| Fume Silica (B1) | 30 | 30 | - | - |
| Fume Silica (B2) | - | - | 30 | 30 |
| Processing Aid 1 | - | 3 | - | - |
| Processing Aid 2 | - | - | - | 3 |
| | | | | |
| Properties | | | | |
| Tensile Strength (psi/Kpa) | 1876 | 1879 | 1790 | 1879 |
| Elongation (%) | 349 | 431 | 320 | 393 |
| Durometer | 52 | 47 | 51 | 45 |

*Copolymer contained 30 mole percent of diphenylsiloxane units and is identical to sample 5 in Table 1.

The presence of the processing aids reduced the durometer hardness value of the cured elastomers.

The thermal stability of an elastomer prepared from a composition of this invention (sample 1 of Table 7) was determined by measuring the time required at temperatures of 250, 320 and 370°C. for the durometer of the cured elastomer to increase from its original value to 90. The results of this evaluation are recorded in Table 8.

The composition of the sample referred to as 1 in Table 8 is described as sample 1 in Table 7. Sample 1a was identical to sample 1 with the addition of two parts of ferric oxide per 100 parts of copolymer. The comparison sample (5c) had the same composition as sample 1 with the exception of substituting an equal weight of the polydimethylsiloxane described earlier in this example for the copolymer.

9

Table 8

Time Required to Reach Durometer Hardness Value of 90

| Temperature | Sample 1 | Sample 1a | Sample 5(c) |
|---|---|---|---|
| 250 | > 25 days | > 50 days | 5 days |
| 320 | 4 days | 10 days | 1 hour ** |
| 370 | 5 hours | 1 day | < 1 hour*** |

c = Comparison sample containing polydimethylsiloxane in place of copolymer

\* = Sample contained 2 parts by weight per 100 parts of copolymer of ferric oxide

\*\* = Surface was brittle

\*\*\* = Sample containing 2 parts by weight per 100 parts of ferric oxide reached a durometer value of 90 in less than one hour

< = less than

> = greater than

The addition of 2 parts by weight of ferric oxide to the curable composition used to prepare sample 1 increased the time required to reach a durometer value of 70 at 370°C. to 7 hours, but did not substantially change the time required for the composition control sample containing the dimethylsiloxane copolymer to reach the same durometer value.

Example 3

This example demonstrates the effect of the type of filler on the physical properties of the cured elastomer. Reinforced curable compositions were prepared, cured and evaluated as described in Example 2, with the exception that the filler was replaced with the type and amount listed in Table 9. The fillers were fume silica treated with methyltrimethoxysilane and hexamethyl-disilazane, fume alumina and fume titania. The concentration of filler is expressed in parts by weight per 100 parts of organosiloxane polymer.

The durometer values of the elastomers following heating for time periods of from 1 to 312 hours are recorded in Table 10.

Table 9

| Filler | | Tensile Strength (psi/Kpa) | Elongation | Durometer |
|---|---|---|---|---|
| Type | Amount | | | |
| $SiO_2$ | 30 | 1867 | 341 | 52 |
| $Al_2O_3$ | 50 | 2016 | 361 | 56 |
| $TiO_2$ | 80 | 1710 | 329 | 57 |

Table 10

| Filler Type | Amount | Durometer Value After X Hours at 320°C. | | | | | |
|---|---|---|---|---|---|---|---|
| X= | | 0 | 1 | 3 | 25 | 119 | 312 |
| $SiO_2$ | 30 | 52 | 50 | 54 | 78 | Brittle | |
| $Al_2O_3$ | 50 | 56 | 68 | 71 | 89 | 93 | |
| $TiO_2$ | 80 | 57 | 71 | 72 | 88 | 95 | Brittle |

**Claims**

1. A curable organosiloxane composition yielding thermally stable elastomers, said composition comprising

   (A) an elastomeric random diorganosiloxane copolymer consisting essentially of dimethylsiloxane units, from 20 to 50 mol percent of diphenylsiloxane units, from 0 to 20 mol of units with a silicon-bonded alkenyl radical containing from 2 to 6 carbon atoms and terminal units selected from the group consisting of triorganosiloxy and silanol,

   (B) an amount of a finely divided reinforcing filler sufficient to enhance the physical properties of elastomers prepared from said composition, and

   (C) a curing agent for said copolymer selected from the group consisting of organic peroxides and combinations of an organosilicon compound containing an average of more than two hydrolyzable groups per molecule and an effective amount of a curing catalyst, with the proviso that said copolymer contains terminal silanol groups when one of said combinations is present as the curing agent.

2. A method for preparing high strength, processable organosiloxane compositions that cure to yield elastomers exhibiting tensile strengths of at least 1000 p.s.i. and excellent resistance to degradation at temperatures above 250°C. said method comprising the steps of

   (1) blending (A) a viscoelastic random copolymer consisting essentially of dimethylsiloxane units, from 20 to 50 mol percent of diphenylsiloxane units, from 0 to 20 mol of units with a silicon-bonded alkenyl radical containing from 2 to 6 carbon atoms and terminal units selected from the group consisting of triorganosiloxy and silanol, with (B) an effective amount of a reinforcing filler to from a homogeneous mixture, and

   (2) curing said mixture using an organic peroxide or a combination of an organosilicon compound containing an average of more than two hydrolyzable groups per molecule and an effective amount of a curing catalyst, with the proviso that said copolymer contains terminal silanol groups when one of said combinations is present as the curing agent.